# EUROPÄISCHE PATENTSCHRIFT

(11) **EP 3 256 335 B1**
(45) Veröffentlichungstag und Bekanntmachung des Hinweises auf die Patenterteilung: **17.10.2018**
(21) Anmeldenummer: 15804766.2
(22) Anmeldetag: 03.12.2015
(51) Int. Cl.: B60C 11/12, B60C 11/03

(54) **FAHRZEUGLUFTREIFEN**
PNEUMATIC TYRE FOR A VEHICLE
PNEUMATIQUE DE VÉHICULE

(30) Priorität: 13.02.2015 DE 102015202615
(43) Veröffentlichungstag der Anmeldung: 20.12.2017
(73) Patentinhaber: Continental Reifen Deutschland GmbH, 30165 Hannover (DE)
(72) Erfinder: BEHR, Ulrich, 30167 Hannover (DE)
(74) Vertreter: Finger, Karsten
(86) Internationale Anmeldenummer: PCT/EP2015/078483
(87) Internationale Veröffentlichungsnummer: WO 2016/128084

(56) Entgegenhaltungen:
- EP-A2- 1 080 949
- AT-B- 402 181
- DE-A1-102012 109 712

## Beschreibung

Die Erfindung betrifft einen Fahrzeugluftreifen mit einem Laufstreifen, welcher bei zumindest einer seiner Schultern eine in Umfangsrichtung umlaufende, laufstreifeninnenseitig von einer Umfangsrille begrenzte Profilrippe aufweist, in welcher sich in axialer Richtung erstreckende, einschnittartig ausgeführte und parallel zueinander verlaufende Querrillen ausgebildet sind, welche laufstreifenaußenseitig über die Bodenaufstandsflächenbreite hinaus verlaufen und laufstreifeninnenseitig in einem Abstand von der die Profilrippe begrenzenden Umfangsrille enden.

Ein derartiger Fahrzeugluftreifen ist beispielsweise aus der DE 10 2012 109 712 A1 bekannt. Die bei am Fahrzeug montierten Reifen der Außenschulter zugeordnete Profilrippe, welche durch eine in Umfangsrichtung umlaufende Umfangsrille von weiteren, laufstreifeninnenseitig verlaufenden Profilpositiven getrennt ist, weist eine Vielzahl von parallel zueinander verlaufenden, relativ schmalen Querrillen auf, welche sich aus drei zueinander gewinkelt verlaufenden Rillenabschnitten zusammensetzen. Der mittlere Rillenabschnitt ist von zwei gegenläufig verlaufenden Schrägflächen begrenzt, in den beiden äußeren Rillenabschnitten ist jeweils eine der Rillenflanken zur Laufstreifenoberfläche mit einer Fase versehen. Durch diese Maßnahmen soll das Negativvolumen in der Profilrippe derart vergrößert sein, dass ein gutes Wasserableitvermögen sichergestellt ist. Einschnittartig und somit relativ schmal ausgeführte Querrillen sind für ein geringes Abrollgeräusch des Reifens von Vorteil, insbesondere wenn sie unter einem relativ geringen Abstand zueinander und entsprechend der rechnerisch ermittelten Pitchfolge angeordnet werden. Gerade im Bereich der Außenschulter des Laufstreifens - dies ist jener schulterseitige Bereich, welcher sich bei am Fahrzeug montiertem Reifen außenseitig befindet - ist die mit einer höheren Anzahl solcher Querrillen verbundene "Aufweichung" der Profilrippe für die Handlingeigenschaften des Reifens auf trockenen und nassen Fahrbahnen nachteilig.

Aus der EP 1 080 949 A2 ist ein Fahrzeugluftreifen mit einem Laufstreifen bekannt, welcher Profilpositive, wie Profilbänder oder Profilblöcke, aufweist, die mit einem Einschnittmuster in der Art von Blütenblättern einer Knospe versehen sind. Dadurch weisen die Profilpositive zumindest ein zentrales Profilelement und dieses Profilelement umlaufende Profilelemente auf. Ein derartiges Einschnittmuster soll dem Reifen gute Griffeigenschaften verleihen.

Aus der AT 402 181 B ist ein Fahrzeugluftreifen mit einem Laufstreifen mit Profilelementen bekannt, in welchen mindestens drei, zumindest im Wesentlichen parallel zueinander sowie in Querrichtung verlaufende Einschnitte ausgebildet sind. Zumindest einer der Einschnitte endet beidseitig innerhalb des Profilelementes, wobei die Enden von in Umfangsrichtung benachbarten Einschnitten zumindest abwechselnd durch weitere Einschnitte verbunden sind. Der Reifen soll sowohl gute Fahreigenschaften auf trockener Fahrbahn als auch unter winterlichen Fahrbedingungen aufweisen.

Der Erfindung liegt die Aufgabe zugrunde, in einem Fahrzeugluftreifen der eingangs genannten Art schulterseitige Profilrippen derart mit Rillen zu gestalten, dass ein geringes Abrollgeräusch aus diesem Bereich generiert wird, eine gute Oberflächenentwässerung sichergestellt bleibt und gleichzeitig die für gute Trocken- und Nasshandlingeigenschaften erforderliche Stabilität der Profilrippen verbessert ist.

Gelöst wird die gestellte Aufgabe erfindungsgemäß dadurch, dass jeweils mindestens drei in Umfangsrichtung aufeinanderfolgende Querrillen eine Querrillengruppe mit äußersten Querrillen und zumindest einer zwischen den äußersten Querrillen verlaufenden, inneren Querrille bilden,
wobei die Enden der jeweils äußersten Querrillen mit weiteren in Umfangsrichtung verlaufenden Rillen, welche seitlich der inneren Querrille(n) verlaufen, zu die innere(n) Querrille(n) rahmenartig umlaufenden Rillen verbunden sind, wobei die Enden der inneren Querrillen einen Mindestabstand von 2 mm zu den weiteren in Umfangsrichtung verlaufenden Rillen aufweisen und wobei die weiteren Rillen eine Breite von 0,5 mm bis 2,0 mm und eine Tiefe von 1,0 mm bis 3,0 mm aufweisen.

Durch diese besondere Anordnung von rahmenartig verlaufenden Rillen, zu welchen die weiteren, in Umfangsrichtung des Laufstreifens verlaufende Rillen gehören, wird die schulterseitige Profilrippe stabilisiert, wobei gleichzeitig zusätzliche Entwässerungsrillen zur Verfügung stehen. Durch die stabilisierende Wirkung werden gute Trocken- und Nasshandlingeigenschaften sichergestellt Die Querrillen in der schulterseitigen Profilrippe können unter den für das Abrollgeräusch vorteilhaften geringen Abständen zueinander angeordnet werden.

Bei einer bevorzugten Ausführungsform der Erfindung sind jeweils bis zu sieben in Umfangsrichtung aufeinanderfolgende Querrillen in einer Querrillengruppe zusammengefasst. Besonders bevorzugt ist eine Ausführung, bei der jeweils vier bis sechs in Umfangsrichtung aufeinanderfolgende Querrillen die Querrillengruppen bilden. Werden zu viele Querrillen in einer gemäß der Erfindung vorgesehenen Querrillengruppe zusammengefasst, so ist die stabilisierende Wirkung zu gering, um eine merkbare Verbesserung der Trocken- und Nasshandlingeigenschaften sicherzustellen. Diesbezüglich ist eine Anordnung von vier bis sechs Querrillen in den Querrillengruppen besonders vorteilhaft.

Besonders bevorzugt ist eine Ausführung, bei der die weiteren in Umfangsrichtung verlaufenden Rillen geradlinig oder leicht bogenförmig verlaufen. Auch diese Maßnahme ist für eine Unterstützung der Entwässerungswirkung von Vorteil. Bevorzugt ist ferner eine Ausführung der Querrillen, bei der an der einen Rillenflanke der Querrillen zumindest in einem Abschnitt ihrer Erstreckung zur Profilaußenfläche eine Fase ausgebildet ist. Solche Fasen haben einen stabilisierenden Effekt auf die Profilrippe und verhindern ein "Einrollen" der Querrillenkante.

Bevorzugt weisen ferner die Querrillen in einem über mindestens 60 % ihrer Erstreckung verlaufenden Abschnitt, abgesehen von jenem Bereich, in welchem gegebenenfalls eine Fase ausgebildet ist, eine Breite von 0,4 mm bis 1,2 mm auf. Derart schmal gestaltete Querrillen sind für die Generierung eines besonders leisen Abrollgeräusches günstig.

Weitere Merkmale, Vorteile und Einzelheiten der Erfindung werden nun anhand der schematischen Zeichnung, die ein Ausführungsbeispiel darstellt, näher beschrieben. Dabei zeigen
Fig. 1 eine Ansicht eines Abschnittes eines Umfangsbereiches eines Laufstreifens eines Fahrzeugluftreifens,
Fig. 2 eine Schnittdarstellung entlang der Linie II-II der Fig. 1 und
Fig. 3 eine Schnittdarstellung entlang der Linie III-III der Fig. 1.

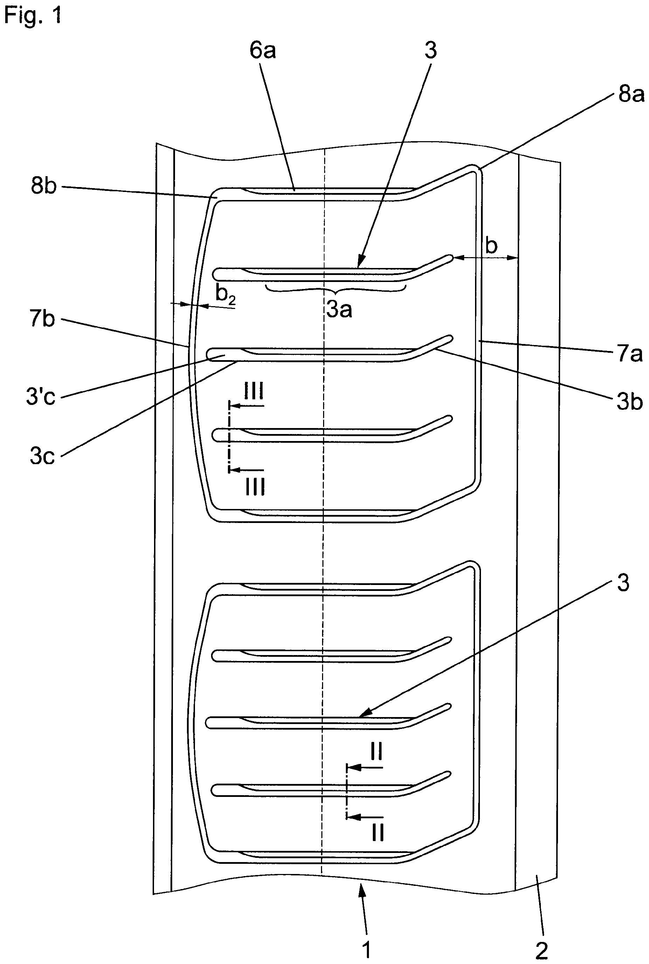

Fig. 1 zeigt einen Umfangsabschnitt einer bei einer Reifenschulter verlaufenden blockartig strukturierten Profilrippe 1 eines Laufstreifens eines Fahrzeugluftreifens in Radialbauart für Personenkraftwagen, Vans und dergleichen. Die Profilrippe 1 ist durch eine in Umfangsrichtung umlaufende Umfangsrille 2 von den Richtung Laufstreifenmitte anschließenden Profilpositiven des Laufstreifens, beispielsweise einer in Umfangsrichtung umlaufende Blockreihe oder einer weiteren Profilrippe, getrennt. Die blockartige Struktur der Profilrippe 1 entsteht durch in der Profilrippe 1 ausgebildete einschnittartig ausgeführte Querrillen 3. Bei der in Fig. 1 gezeigten Ausführungsform verlaufen die Querrillen 3 geradlinig bzw. im Wesentlichen geradlinig unter relativ geringen gegenseitigen Abständen von 10 mm bis 17 mm nahezu exakt in Laufstreifenquerrichtung, wobei die Querrillen 3 auch unter einem spitzen Winkel von bis zu 30° zur exakten Laufstreifenquerrichtung verlaufen können. Die Querrillen 3 setzen sich aus einem über zumindest 60 % ihrer Erstreckung verlaufenden mittleren Rillenabschnitt 3a, einem laufstreifeninnenseitigen Rillenabschnitt 3b und einem laufstreifenaußenseitigen Rillenabschnitt 3c zusammen. Der laufstreifeninnenseitige Rillenabschnitt 3b endet in einem Abstand b von insbesondere 10 mm bis 15 mm vor der Umfangsrille 2, der laufstreifenaußenseitige Rillenabschnitt 3c befindet sich außerhalb der bodenberührenden Teils des Laufstreifens, dessen in der Profilrippe 1 befindlicher seitlicher Rand mit einer gestrichelten Linie gekennzeichnet ist. Der bodenberührende Teil des Laufstreifens entspricht dem statisch ermittelten Footprint gemäß E.T.R.T.O.-Standards (Last bei 70 % der Tragfähigkeit bei einem Innendruck von 2,5 bar, Innendruck 85 % von 2,5 bar).

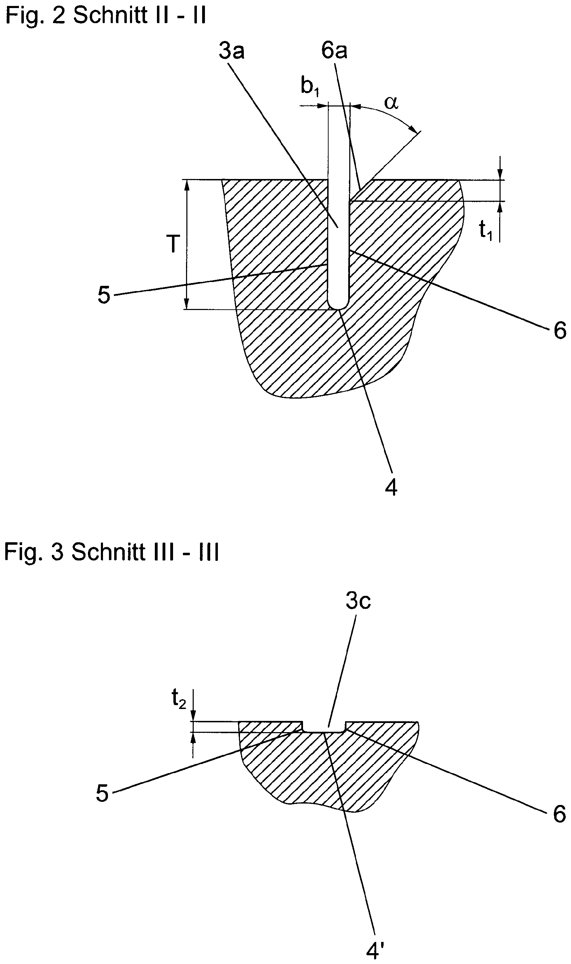

Im Rillenabschnitt 3a weist jede Querrille 3 den in Fig. 2 gezeigten Querschnitt mit zwei in radialer Richtung verlaufenden Rillenflanken 5, 6, einem gerundeten Rillengrund 4 und einer Fase 6a - einer schmalen Schrägfläche zwischen der Rillenflanke 6 und der Außenfläche der Profilrippe 1 - auf. Zwischen den Rillenflanken 5, 6 weist der Rillenabschnitt 3a der Querrille 3 eine Breite b₁ von 0,4 mm bis 1,2 mm und an seiner tiefsten Stelle beim Übergang zum laufstreifeninnenseitigen Rillenabschnitt 3b eine Tiefe von T von 4 mm bis 7 mm auf. Die Tiefe T wird in Richtung zum laufstreifenaußenseitigen Rillenabschnitt 3c kontinuierlich geringer, sodass beim Übergang zum laufstreifenaußenseitigen Rillenabschnitt 3c zwischen der radial inneren Kante der Fase 6a und dem Rillengrund 4 ein sehr kleiner radialer Abstand von 0,1 mm bis 1 mm vorliegt.

Die Fase 6a verläuft zur radialen Richtung unter einem Winkel α, welcher zwischen 30° und 50° beträgt, und reicht bis in eine Tiefe t₁ von 0,5 bis 1,5 mm. Über die Erstreckung des mittleren Rillenabschnittes 3a bildet die Fase 6a daher eine die Breite der Querrille 3 vergrößernde, schmale Schrägfläche. Über die Erstreckung des Rillenabschnittes 3a sind die Neigung und der Verlauf der Fase 6a konstant bzw. im Wesentlichen konstant, das heißt es ändern sich t₁ und der Winkel α kaum bzw. nicht. Im laufstreifeninnenseitigen Rillenabschnitt 3b sind die Rillenflanke 5 und die dieser gegenüberliegende Rillenflanke 6 sowie die Fase 6a derart fortgesetzt, dass sich die Tiefe T der Querrille 3 kontinuierlich verringert, sodass am geschlossenen Ende des Rillenabschnittes 3b keine nennenswerte bzw. eine sehr geringe Tiefe vorliegt. Dabei läuft die Fase 6a unter Beibehalten ihrer an der Laufstreifenoberfläche geradlinig verlaufenden Kante und unter kontinuierlicher Verringerung ihrer Breite in radialer Richtung im Bereich des Endes des laufstreifeninnenseitigen Rillenabschnittes 3b aus. Die Rillenflanken 5 und 6 folgen der auslaufenden Fase 6a, sodass der Rillenabschnitt 3b leicht bogenförmig verläuft.

Im laufstreifenaußenseitigen Rillenabschnitt 3c verringert sich die radiale Erstreckung der Rillenflanken 5, 6 bis auf eine Tiefe t₂ von 1,0 mm bis 1,5 mm. Die Fase 6a läuft unter kontinuierlicher Verringerung ihrer Breite und ihrer radialen Erstreckung an der Laufstreifenoberfläche aus, wobei sich die an der Laufstreifenoberfläche befindlichen Querrillenkanten des mittleren Rillenabschnittes 3a im laufstreifenaußenseitigen Rillenabschnitt 3c unter Beibehalten ihres gegenseitigen Abstandes fortsetzen. Der ohne Fase ausgeführte Endabschnitt 3'c des laufstreifenaußenseitigen Rillenabschnittes 3c weist den in Fig. 3 gezeigten flach U-förmigen Querschnitt mit zwei bis in die erwähnte Tiefe t₂ von 1,0 mm bis 1,5 mm verlaufenden Rillenflanken 5 und 6, die im Wesentlichen in radialer Richtung bzw. unter einem Winkel von bis zu etwa 7° zur radialen Richtung verlaufen, und mit einem breiten Rillengrund 4' auf, dessen Breite der Breite des Rillenabschnittes 3c an der Laufstreifenoberfläche entspricht.

In der Profilrippe 1 bilden jeweils fünf in Umfangsrichtung aufeinanderfolgende Querrillen 3 eine Querrillengruppe bzw. sind jeweils fünf aufeinanderfolgende Querrillen 3 zu einer Querrillengruppe zusammengefasst, indem die beiden äußersten Querrillen 3 gemeinsam mit zwei in Umfangsrichtung verlaufenden weiteren Rillen 7a, 7b einen die mittleren drei Querrillen 3 umlaufenden "Rillenrahmen" bilden. Die laufstreifeninnenseitigen Rillenabschnitte 3b der beiden äußeren Querrillen 3 sind über kurze Übergangsabschnitte 8a mit der weiteren Rille 7a verbunden, welche bei der dargestellten Ausführung in Umfangsrichtung geradlinig verläuft und den laufstreifeninnenseitigen "Rahmenteil" bildet. Übergangsabschnitte 8b verbinden die laufstreifenaußenseitigen Rillenabschnitte 3c mit der Rille 7b, welche bei der dargestellten Ausführung leicht bogenförmig nach außen verläuft und den laufstreifenaußenseitigen "Rahmenteil" bildet. Die Übergangsabschnitte 8a, 8b sind bezüglich ihrer Breite und ihres Tiefenverlaufes entsprechend ausgestaltet. Die Rillen 7a und 7b weisen eine zumindest im Wesentlichen konstante Breite b₂ an der Außenfläche der Profilrippe 1 auf, die zwischen 0,5 mm und 2 mm gewählt wird. Die Tiefe der Rillen 7a und 7b beträgt zwischen 1 mm und 3 mm und ist vorzugsweise über die Erstreckung der Rillen 7a und 7b konstant, kann jedoch auch abschnittsweise variiert werden.

Die drei innerhalb der rahmenartig umlaufenden Rillen - der Querrillen 3 und der Rillen 7a, 7b - verlaufenden Querrillen 3 weisen laufstreifeninnenseitige und laufstreifenaußenseitige Rillenabschnitte 3b, 3c mit geschlossenen Enden auf, wobei die geschlossenen Enden der Endabschnitte 3'c in Draufsicht gerundet, insbesondere entlang eines Halbkreises gerundet, ausgeführt sind. In jedem Fall weisen die Enden der laufstreifeninnenseitigen und der laufstreifenaußenseitigen Rillenabschnitte 3b, 3c einen Abstand von mindestens 2 mm zu den Rillen 7a und 7b auf.

Bei weiteren, gesondert nicht gezeigten Ausführungsvarianten der Erfindung können drei bis sieben, insbesondere vier bis sechs, Querrillen 3 gemäß der Erfindung zu in Umfangsrichtung aufeinanderfolgenden Rillengruppen kombiniert werden, wobei jeweils die äußersten der Querrillen 3 der Rillengruppen die in Querrichtung des Laufstreifens verlaufenden "Rahmenteile" des "Rillenrahmens" bilden.

Die einschnittartig ausgebildeten Querrillen 3 sind für ein leises Abrollgeräusch des Fahrzeugluftreifens besonders vorteilhaft. Das erfindungsgemäße Verbinden bestimmter Querrillen mit in Umfangsrichtung verlaufenden weiteren Rillen zu einem zumindest eine Querrille umlaufenden "Rillenrahmen" stabilisiert die Profilrippe und stellt zusätzliche Entwässerungsrillen und zusätzliche Kanten zur Verfügung, sodass die Handlingeigenschaften des Reifens auf trockenen und auf nassen Fahrbahnen positiv beeinflusst werden.

Die Erfindung ist auf das dargestellte und beschriebene Ausführungsbeispiel nicht eingeschränkt. Die einschnittartig ausgebildeten Querrillen können einen anderen Verlauf, beispielsweise mehrere zueinander gewinkelt verlaufende Abschnitte, aufweisen.

### Bezugsziffernliste

- 1: Profilrippe
- 2: Umfangsrille
- 3: Querrille
- 3a, 3b, 3c: Rillenabschnitt
- 3'c: Endabschnitt
- 4, 4': Rillengrund
- 5, 6: Rillenflanke
- 6a: Fase
- 7a, 7b: Rille
- 8a, 8b: Übergangsabschnitt
- b: Abstand
- b₁, b₂: Breite
- T, t₁, t₂: Tiefe
- α: Winkel

## Patentansprüche

1. Fahrzeugluftreifen mit einem Laufstreifen, welcher bei zumindest einer seiner Schultern eine in Umfangsrichtung umlaufende, laufstreifeninnenseitig von einer Umfangsrille (2) begrenzte Profilrippe (1) aufweist, in welcher sich in axialer Richtung erstreckende, einschnittartig ausgeführte und parallel zueinander verlaufende Querrillen (3) ausgebildet sind, welche laufstreifenaußenseitig über die Bodenaufstandsflächenbreite hinaus verlaufen und laufstreifeninnenseitig in einem Abstand (b) von der die Profilrippe (1) begrenzenden Umfangsrille (2) enden, **dadurch gekennzeichnet,**
**dass** jeweils mindestens drei in Umfangsrichtung aufeinanderfolgende Querrillen (3) eine Querrillengruppe mit äußersten Querrillen (3) und zumindest einer zwischen den äußersten Querrillen (3) verlaufenden, inneren Querrille (3) bilden,
wobei die Enden der jeweils äußersten Querrillen (3) mit weiteren in Umfangsrichtung verlaufenden Rillen (7a, 7b), welche seitlich der inneren Querrille(n) (3) verlaufen, zu die innere(n) Querrille(n) (3) rahmenartig umlaufenden Rillen (3, 7a, 7b) verbunden sind,
wobei die Enden der inneren Querrille(n) (3) einen Mindestabstand von 2 mm zu den weiteren in Umfangsrichtung verlaufenden Rillen (7a, 7b) aufweisen und wobei die weiteren Rillen (7a, 7b) eine Breite (b₂) von 0,5 mm bis 2,0 mm und eine Tiefe von 1,0 mm bis 3,0 mm aufweisen.

2. Fahrzeugluftreifen nach Anspruch 1, **dadurch gekennzeichnet, dass** jeweils bis zu sieben in Umfangsrichtung aufeinanderfolgende Querrillen (3) die Querrillengruppen bilden.

3. Fahrzeugluftreifen nach Anspruch 1, **dadurch gekennzeichnet, dass** jeweils vier bis sechs in Umfangsrichtung aufeinanderfolgende Querrillen (3) die Querrillengruppen bilden.

4. Fahrzeugluftreifen nach einem der Ansprüche 1 bis 3, **dadurch gekennzeichnet, dass** die weiteren in Umfangsrichtung verlaufenden Rillen (7a, 7b) geradlinig oder leicht bogenförmig verlaufen.

5. Fahrzeugluftreifen nach einem der Ansprüche 1 bis 4, **dadurch gekennzeichnet, dass** die Querrillen (3) zumindest im Wesentlichen geradlinig verlaufen.

6. Fahrzeugluftreifen nach einem der Ansprüche 1 bis 5, **dadurch gekennzeichnet, dass** an der einen Rillenflanke (6) der Querrillen (3) zumindest in einem Abschnitt (3a) ihrer Erstreckung zur Profilaußenfläche eine Fase (6a) ausgebildet ist.

7. Fahrzeugluftreifen nach einem der Ansprüche 1 bis 6, **dadurch gekennzeichnet, dass** die Querrillen (3) in einem über mindestens 60 % ihrer Erstreckung verlaufenden Abschnitt (3a), abgesehen von jenem Bereich, in welchen gegebenenfalls eine Fase (6a) ausgebildet ist, eine Breite von 0,4 mm bis 1,2 mm aufweisen.

## Claims

1. Pneumatic vehicle tyre having a tread, which tread, at at least one of its shoulders, has a profile rib (1) which runs in encircling fashion in a circumferential direction and which is delimited at the inner side of the tread by a circumferential channel (2) and in which there are formed transverse channels (3), which transverse channels extend in an axial direction and are of sipe-like design and run parallel to one another and, at the outer side of the tread, run beyond the ground contact patch width and, at the inner side of the tread, end at a distance (b) from the circumferential channel (2) that delimits the profile rib (1),
**characterized**
**in that** in each case at least three transverse channels (3) which are successive in the circumferential direction form a transverse channel group with outermost transverse channels (3) and with at least one inner transverse channel (3) which runs between the outermost transverse channels (3), wherein the ends of the respectively outermost transverse channels (3) are connected to further channels (7a, 7b), which run in the circumferential direction and which run to the side of the inner transverse channel(s) (3), to form channels (3, 7a, 7b) which encircle the inner transverse channel(s) (3) in a frame-like manner,
wherein the ends of the inner transverse channel(s) (3) have a minimum distance of 2 mm from the further channels (7a, 7b) which run in the circumferential direction, and wherein the further channels (7a, 7b) have a width (b₂) of 0.5 mm to 2.0 mm and a depth of 1.0 mm to 3.0 mm.

2. Pneumatic vehicle tyre according to Claim 1,
**characterized in that** in each case up to seven transverse channels (3) which are successive in the circumferential direction form the transverse channel groups.

3. Pneumatic vehicle tyre according to Claim 1,
**characterized in that** in each case four to six transverse channels (3) which are successive in the circumferential direction form the transverse channel groups.

4. Pneumatic vehicle tyre according to one of Claims 1 to 3, **characterized in that** the further channels (7a, 7b) which run in the circumferential direction run in rectilinear or slightly arcuate fashion.

5. Pneumatic vehicle tyre according to one of Claims 1 to 4, **characterized in that** the transverse channels (3) run at least substantially in rectilinear fashion.

6. Pneumatic vehicle tyre according to one of Claims 1 to 5, **characterized in that**, on one channel flank (6) of the transverse channels (3), at least in one section (3a) of their extent, a bevel (6a) is formed towards the profile outer surface.

7. Pneumatic vehicle tyre according to one of Claims 1 to 6, **characterized in that** the transverse channels (3), in a section (3a) which runs over at least 60% of their extent, aside from that region in which a bevel (6a) is possibly formed, have a width of 0.4 mm to 1.2 mm.

## Revendications

1. Pneumatique de véhicule comprenant une bande de roulement qui présente, pour au moins l'un de ses épaulements, une nervure profilée (1) s'étendant sur la périphérie dans la direction périphérique, limitée du côté intérieur de la bande de roulement par une rainure périphérique (2), dans laquelle sont réalisées des rainures transversales (3) s'étendant dans la direction axiale, réalisées sous forme d'entailles et s'étendant parallèlement les unes aux autres, qui s'étendent du côté extérieur de la bande de roulement au-delà de la largeur de la surface d'appui au sol et qui se terminent du côté intérieur de la bande de roulement à une distance (b) de la rainure périphérique (2) limitant la nervure profilée (1), **caractérisé en ce que**
à chaque fois au moins trois rainures transversales (3) se suivant dans la direction périphérique forment un groupe de rainures transversales avec des rainures transversales les plus extérieures (3) et au moins une rainure transversale intérieure (3) s'étendant entre les rainures transversales les plus extérieures (3), les extrémités des rainures transversales à chaque fois les plus extérieures (3) étant connectées à d'autres rainures (7a, 7b) s'étendant dans la direction périphérique, qui s'étendent latéralement par rapport à la ou aux rainures transversales intérieures (3), pour former des rainures (3, 7a, 7b) entourant en forme de cadre la ou les rainures transversales intérieures (3),
les extrémités de la ou des rainures transversales intérieures (3) présentant une distance minimale de 2 mm aux autres rainures (7a, 7b) s'étendant dans la direction périphérique et les autres rainures (7a, 7b) présentant une largeur (b₂) de 0,5 mm à 2,0 mm et une profondeur de 1,0 mm à 3,0 mm.

2. Pneumatique de véhicule selon la revendication 1, **caractérisé en ce qu'**à chaque fois jusqu'à sept rainures transversales (3) se suivant dans la direction périphérique forment les groupes de rainures transversales.

3. Pneumatique de véhicule selon la revendication 1, **caractérisé en ce qu'**à chaque fois quatre à six rainures transversales (3) se suivant dans la direction périphérique forment les groupes de rainures transversales.

4. Pneumatique de véhicule selon l'une quelconque des revendications 1 à 3, **caractérisé en ce que** les autres rainures (7a, 7b) s'étendant dans la direction périphérique s'étendent en ligne droite ou de manière légèrement courbée.

5. Pneumatique de véhicule selon l'une quelconque des revendications 1 à 4, **caractérisé en ce que** les rainures transversales (3) s'étendent au moins essentiellement en ligne droite.

6. Pneumatique de véhicule selon l'une quelconque des revendications 1 à 5, **caractérisé en ce qu'**un biseau (6a) est réalisé au niveau de l'un des flancs de rainure (6) des rainures transversales (3) au moins dans une portion (3a) de leur étendue jusqu'à la surface extérieure du profilé.

7. Pneumatique de véhicule selon l'une quelconque des revendications 1 à 6, **caractérisé en ce que** les rainures transversales (3) présentent une largeur de 0,4 mm à 1,2 mm, dans une portion (3a) s'étendant sur au moins 60 % de leur étendue, à l'exception de la région dans laquelle est éventuellement réalisé un biseau (6a).
